(19) Europäisches Patentamt / European Patent Office / Office européen des brevets

(11) **EP 3 764 074 B1**

(12) **EUROPEAN PATENT SPECIFICATION**

(45) Date of publication and mention
of the grant of the patent:
**22.10.2025 Bulletin 2025/43**

(21) Application number: **19764815.7**

(22) Date of filing: **11.03.2019**

(51) International Patent Classification (IPC):
*G01M 5/00* (2006.01)   *G06Q 10/0635* (2023.01)
*G06Q 50/06* (2024.01)

(52) Cooperative Patent Classification (CPC):
**G01M 5/0025; G01M 5/0033; G01M 5/0066;**
G06Q 10/0635; G06Q 50/06

(86) International application number:
**PCT/JP2019/009566**

(87) International publication number:
**WO 2019/172455 (12.09.2019 Gazette 2019/37)**

(54) **PIPELINE DIAGNOSING DEVICE, ASSET MANAGEMENT DEVICE, PIPELINE DIAGNOSING METHOD, AND RECORDING MEDIUM**

ROHRLEITUNGSDIAGNOSEVORRICHTUNG, ANLAGENVERWALTUNGSVORRICHTUNG, ROHRLEITUNGSDIAGNOSEVERFAHREN UND AUFZEICHNUNGSMEDIUM

DISPOSITIF DE DIAGNOSTIC DE PIPELINE, DISPOSITIF DE GESTION D'ACTIFS, PROCÉDÉ DE DIAGNOSTIC DE PIPELINE ET SUPPORT D'ENREGISTREMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.03.2018 JP 2018043221**

(43) Date of publication of application:
**13.01.2021 Bulletin 2021/02**

(73) Proprietor: NEC Corporation
**108-8001 Tokyo (JP)**

(72) Inventor: **KUSUMOTO, Manabu
Tokyo 108-8001 (JP)**

(74) Representative: **Betten & Resch
Patent- und Rechtsanwälte PartGmbB
Maximiliansplatz 14
80333 München (DE)**

(56) References cited:
**WO-A1-2017/169875    WO-A1-2017/199839
JP-A- 2001 116 664    JP-A- 2007 171 067
JP-A- 2016 053 250    JP-A- H08 122 221
JP-A- H08 122 221**

## Description

[Technical Field]

The present disclosure relates to a pipeline diagnosing device and the like for diagnosing a failure risk of a pipeline facility.

[Background Art]

A pipeline facility such as a general water and sewage network is provided in a large scale. In such a pipeline facility, it is known that progress of deterioration of a pipeline embedded in the ground differs depending on an acidity of soil where the pipeline is embedded, an electric potential, a pressure, and the like. Therefore, in the above-described pipeline facility, even a relatively new pipeline may be drastically deteriorated regardless of the number of years elapsed, and a problem such as water leakage or a rupture accident may occur. Conversely to the above-described example, even when a pipeline is old, there is a case that deterioration is small, and replacement is not necessary. Therefore, there is a problem that, even when a state of an old pipeline is good, the pipeline may be wastefully replaced, and an excessive cost may be expended. Therefore, in the above-described pipeline facility, a technique of appropriately diagnosing a degree of deterioration of a current pipeline, and progress of deterioration in the future is required in such a way as to enable accurate and efficient repair and replacement of a pipeline.

As a technique related to diagnosing a degree of deterioration of a pipeline, for example, techniques described in PTLs 1 to 3 are known. In the technique described in PTL 1, data (such as a type, a viscosity, an average flow velocity, a pressure, and a temperature of fluid) relating to fluid flowing through a pipeline are recorded in a database together with three-dimensional layout information on pipeline components. In a fluid simulation processing unit of PTL 1, a shear stress is derived regarding a pipeline component mounted on a piping line, a thickness of which is not measured. A thickness reduction rate of each of the pipeline components of the piping line is derived from a value of the shear stress, and a future thickness is predicted.

In the technique described in PTL 2, a flow inside a pipeline in a driving process such as starting and stopping of an actual plant is three-dimensionally visualized by a virtual reality device. Thus, PTL 2 is able to visualize in advance, by virtual simulation, a thermal fluid behavior inside a pipeline along a timewise change of fluid conditions (a pressure, a temperature, and a flow rate) in an operation plan of the actual plant. PTL 2 is also able to evaluate in advance robustness of a pipeline with respect to thermal fatigue damage in an unsteady driving operation of the actual plant.

In the technique described in PTL 3, a plurality of acceleration sensors are mounted on curved corners such as elbows of a pipeline in order to inspect deterioration of a pipeline facility of a plant. An impact and a pressure applied to the pipeline by collision of chemical compositions or the like flowing through the pipeline are measured. Thus, deterioration of the pipeline facility at specific places where the sensors are mounted is accurately detected. PTL 4 also discloses a technique relating to the present disclosure.

[Citation List]

[Patent Literature]

[PTL 1] Japanese Unexamined Patent Application Publication No. 2001-344295
[PTL 2] Japanese Unexamined Patent Application Publication No. 2005-315581
[PTL 3] Japanese Unexamined Patent Application Publication No. 2007-101232
[PTL 4] Japanese Unexamined Patent Application Publication No. 2013-61350

Another diagnosing device is known from the document WO 2017/199839.

[Summary of Invention]

[Technical Problem]

In a general pipeline network, pressure oscillations of fluid occur, accompanied by a change in use or condition of fluid inside a pipe. More specifically, for example, pressure oscillations of fluid occur resulting from sudden opening/closing of a valve, generation and collapse of air puddle, opening/closing of a water faucet accompanied by customer's fluid use, and the like. Such pressure fluctuations cause stress fluctuations in a pipeline, and cause fatigue of the pipeline. In a pipeline network, repetitive stress fluctuations occur due to years of use. In order to prevent rupture of a pipeline due to progress of fatigue generated by the repetitive stress fluctuations, it is important to estimate a replacement timing of the pipeline, evaluate pressure fluctuations applied to the pipeline, and estimate a progress speed of fatigue. The progress of fatigue greatly changes according to an amplitude of a stress applied to a pipe. A repetitive stress is actually applied to the pipe in a state that large and small amplitudes are mixed, and it is necessary to estimate fatigue by measuring a stress for each magnitude of the amplitude.

The techniques disclosed in PTLs 1 to 3 are able to evaluate a thickness of a piping line in the future, robustness of a pipeline with respect to thermal fatigue damage, an impact applied to the pipeline by collision of chemical compositions or the like flowing through the pipeline, and the like. However, the techniques disclosed in PTLs 1 to 3 fail to estimate a degree of deterioration of a pipeline in the future due to repetitive stress fluctuations, and the life of the pipeline based on the degree of deterioration. In view of the above, persons in charge of water supply business and the like have encountered a problem that it is not possible to determine an appropriate replacement timing of a pipeline, or a replacement order with enhanced economic efficiency regarding a large number of pipelines owned by the persons in charge of water supply business and the like.

In view of the above-described circumstances, an object of the present disclosure is to provide a pipeline diagnosing device and the like capable of estimating an appropriate replacement timing of a pipeline.

[Solution to Problem]

In order to solve the above-described issues, the present disclosure proposes the following measures. A pipeline diagnosing device according to a first aspect of the present disclosure includes: a simulation executing unit that executes, based on pipeline information for specifying a configuration of a pipeline facility to be diagnosed, a simulation of pressure oscillations inside a pipeline of the pipeline facility; a fatigue cycle analyzing unit that calculates a fatigue cycle of the pipeline from a simulation result of the pressure oscillations and measurement data of a pressure; and an index calculating unit that calculates an index indicating a failure risk of the pipeline from a fatigue cycle analyzed by the fatigue cycle analyzing unit.

A pipeline diagnosing method according to a second aspect of the present disclosure includes: executing, based on pipeline information for specifying a configuration of a pipeline facility to be diagnosed, a simulation of pressure oscillations inside a pipeline constituting the pipeline facility; calculating, based on pressure oscillations acquired by the simulation and a measured waveform by pressure measurement, a stress and the number of repetitions of stress fluctuations being generated in the pipeline constituting the pipeline facility; and calculating an index indicating a failure risk of the pipeline from a stress and the number of repetitions of stress fluctuations being generated in the pipeline.

A pipeline diagnosing program according to a third aspect of the present disclosure causes a computer to execute: executing, based on pipeline information for specifying a configuration of a pipeline facility to be diagnosed, a simulation of pressure oscillations inside a pipeline constituting the pipeline facility; calculating, based on pressure oscillations acquired by the simulation and a measured waveform by pressure measurement, a stress and the number of repetitions of stress fluctuations being generated in the pipeline constituting the pipeline facility; and calculating an index indicating a failure risk of the pipeline from a stress and the number of repetitions of stress fluctuations being generated in the pipeline.

[Advantageous Effects of Invention]

The present disclosure is able to estimate an appropriate replacement timing of a pipeline.

[Brief Description of Drawings]

[Fig. 1] Fig. 1 is a block diagram illustrating a schematic configuration of a pipeline diagnosing device according to the present disclosure.
[Fig. 2] Fig. 2 is a block diagram illustrating a specific configuration of a pipeline diagnosing device according to a first example embodiment of the present disclosure.
[Fig. 3] Fig. 3 is a flowchart illustrating an operation of the pipeline diagnosing device according to the first example embodiment of the present disclosure.
[Fig. 4] Fig. 4 is a block diagram specifically illustrating a configuration of a pipeline diagnosing device according to a second example embodiment of the present disclosure.
[Fig. 5] Fig. 5 is a flowchart illustrating an operation of the pipeline diagnosing device according to the second example embodiment of the present disclosure.

[Fig. 6] Fig. 6 is a diagram illustrating one example of connection information of a pipeline network stored in a database of a geographic information system.

[Fig. 7] Fig. 7 is a diagram for describing conversion from a water pipe network into an electric circuit network.

[Fig. 8] Fig. 8 is a diagram illustrating one example of an analysis of a fatigue cycle according to an example embodiment of the present disclosure.

[Fig. 9] Fig. 9 is a diagram illustrating one example of strength data of a pipeline for use in an example embodiment of the present disclosure.

[Fig. 10] Fig. 10 is a block diagram illustrating one example of a computer which achieves a pipeline diagnosing device according to the first and second example embodiments of the present disclosure.

[Example Embodiment]

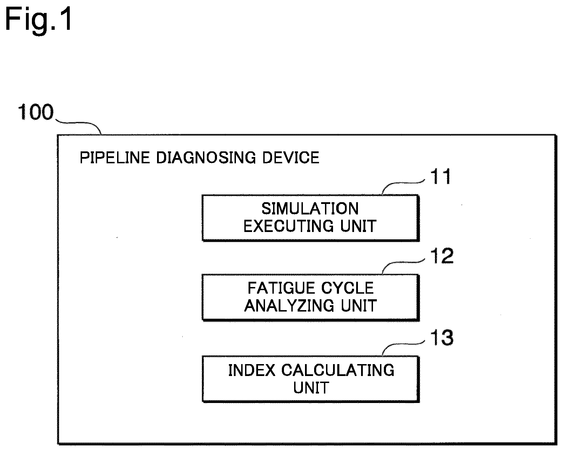

A minimum configuration example of a pipeline diagnosing device for diagnosing deterioration of a pipeline facility according to the present disclosure is described with reference to Fig. 1. A pipeline diagnosing device 100 in the illustrated example includes a simulation executing unit 11, a fatigue cycle analyzing unit 12, and an index calculating unit 13.

The simulation executing unit 11 executes, based on pipeline information for specifying a configuration of a pipeline facility to be diagnosed, a simulation of pressure oscillations inside a pipeline constituting the pipeline facility. In the present description, a simulation of pressure oscillations is deriving how oscillations generated by customer's water use, pressure fluctuations due to opening/closing of a valve and the like, or the like propagate through a pipeline network, when the pipeline facility is a water supply network. The fatigue cycle analyzing unit 12 calculates a fatigue cycle relating to a pipeline, based on pressure oscillations acquired by the simulation, and waveform data of a pressure. In the present description, the "fatigue cycle" is a counted number of times (number of repetitions) by which a stress of causing fatigue failure is repeatedly applied to a pipeline (diagnosing target) with a plurality of different magnitudes of stress amplitude, for each magnitude of the stress amplitude. The index calculating unit 13 calculates an index indicating a failure risk of the pipeline from the fatigue cycle analyzed by the fatigue cycle analyzing unit 12.

In the pipeline diagnosing device 100, a degree of fatigue generated in a pipeline facility to be diagnosed is calculated. Fatigue generated in a pipeline causes deterioration, and consequently, rupture of the pipeline. Therefore, in the illustrated example, it is possible to estimate progress of deterioration of a pipeline in the future in a pipeline facility.

(First Example Embodiment)

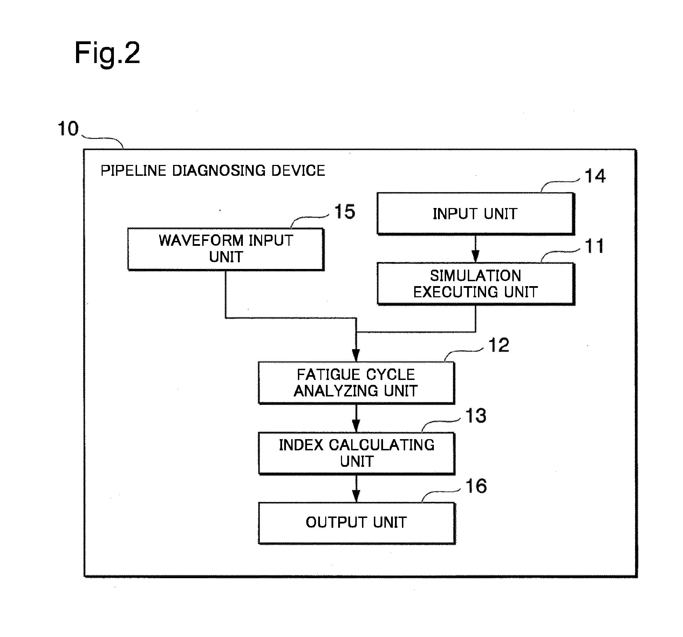

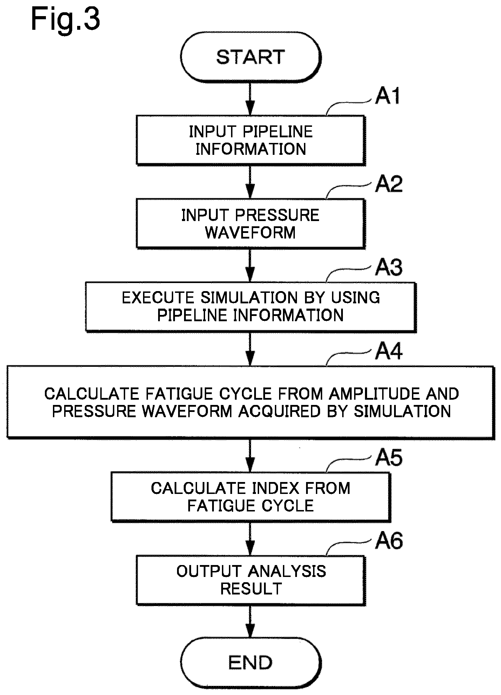

A first example embodiment according to the present disclosure is described with reference to Figs. 2 and 3. Fig. 2 is a block diagram illustrating a pipeline diagnosing device 10 according to the first example embodiment, which is a further example embodiment of the pipeline diagnosing device 100 in Fig. 1. The pipeline diagnosing device 10 in Fig. 2 includes the simulation executing unit 11, the fatigue cycle analyzing unit 12, and the index calculating unit 13 being main components of the pipeline diagnosing device 100. These components are as described above.

The pipeline diagnosing device 10 in Fig. 2 includes an input unit 14, a waveform input unit 15, and an output unit 16, in addition to the simulation executing unit 11, the fatigue cycle analyzing unit 12, and the index calculating unit 13 described above. Among these components, the input unit 14 receives an external instruction. For example, when start to diagnose a pipeline is instructed, the input unit 14 receives the instruction, and transmits the received instruction to the simulation executing unit 11.

The input unit 14 receives pipeline information from the outside, and transmits the received pipeline information to the simulation executing unit 11. In the input unit 14, it is also possible to provide an input screen, on a screen of a terminal device connected to the pipeline diagnosing device 10. In this case, a user of the pipeline diagnosing device 10 is able to input pipeline information, on an input screen of an own terminal device.

The waveform input unit 15 receives measurement data on a measured waveform of a pressure applied to the pipeline. The measurement data may be data measured by a sensor connected to the pipeline (various types of sensors such as a sensor for measuring a pressure inside the pipeline, a strain gauge for measuring a strain of the pipeline, for example). The waveform input unit 15 may be constituted of a terminal device shared by the input unit 14. The output unit 16 outputs, to the outside, a calculation result calculated by the index calculating unit 13. Specifically, the output unit 16 outputs a calculation result to a terminal device (not illustrated) connected to the pipeline diagnosing device 10, or a display device (not illustrated) connected to the pipeline diagnosing device 10. In this case, a calculation result that can be confirmed by a user is displayed on a screen of the terminal device or the display device.

As described above, pipeline information is information for use in executing a simulation of fluid flowing through a pipeline constituting a pipeline facility. Specifically, the pipeline information includes, for example, a connection relation (layout of a pipeline), a length, a diameter (aperture), an internal coefficient of friction, and a propagation speed of a pressure wave in a pipeline constituting a pipeline facility. The internal coefficient of friction in a pipeline constituting a pipeline facility may include a pressure loss resulting from branching of a pipeline, a cross-sectional change, and the like. The pipeline information may also include a factor (e.g. information on a tank, a valve, and the like), which may affect pressure oscillations of a pipeline. Since the coefficient of friction and the propagation speed are calculatable from a material of a pipeline, a surface roughness of an inner surface, and the like, information (such as a material of a pipeline and a surface roughness of an inner surface) for calculating these parameters may be included in the pipeline information, in place of the coefficient of friction and the propagation speed.

In the first example embodiment, a water pipe network is exemplified as a pipeline facility, of which deterioration is diagnosed, for example. When the pipeline facility is a water pipe network, the pipeline information may include information on a customer's amount of use of water from the water pipe network, a reservoir connected to the water pipe network, a tank connected to the water pipe network, a pressure regulation valve, and the like. The waveform input unit 15 inputs, to the fatigue cycle analyzing unit 12, a measured waveform of a pressure at several positions of the pipe network. Specifically, the waveform input unit 15 measures a timewise change of an internal pressure by a pressure sensor mounted at each of positions of the pipe network, and inputs a measured waveform of the pressure to the fatigue cycle analyzing unit 12. The waveform input unit 15 may not only directly input data from a sensor, but also read a file in which measured data are temporarily held, and input the read file to the fatigue cycle analyzing unit 12.

In the first example embodiment, the simulation executing unit 11 executes a simulation of pressure oscillations inside a pipeline constituting a pipeline facility, based on pipeline information input from the input unit 14. As described above, the simulation of pressure oscillations is deriving how oscillations generated by customer's water use, pressure fluctuations due to opening/closing of a valve and the like, or the like propagate through a pipeline network, when the pipeline facility is a water supply network.

In the first example embodiment, the simulation executing unit 11 configures an electric circuit equivalent to a pipeline facility by using pipeline information. The simulation executing unit 11 executes a simulation by assuming that a voltage of the electric circuit is a pressure inside a pipeline. Specifically, the simulation executing unit 11 calculates a pressure inside a pipeline by expressing a behavior of fluid flowing through a pipeline facility by an electric circuit network, and calculating a voltage by a circuit simulator.

Specifically, in the simulation executing unit 11, since a behavior of fluid is expressed by an electric circuit network, a flow rate of fluid flowing through a pipeline is associated with electric current, and a pressure inside the pipeline is associated with a voltage. Thus, in the simulation executing unit 11, a model of an electric circuit network capable of simulating a state of fluid flowing through a pipeline is generated (or presumed). Electric current of the modeled electric circuit network, and a flow rate of fluid flowing through the pipeline are mutually convertible. A voltage of the modeled electric circuit network, and a pressure of fluid flowing through the pipeline are mutually convertible.

The simulation executing unit 11 detects a voltage at each of units of the electric circuit network by executing a simulation. The simulation executing unit 11 sets a simulation result of pressure oscillations by converting the detected voltage into a pressure. The simulation executing unit 11 is also able to acquire oscillation characteristics for each of frequencies or chronological oscillation characteristics of a pipeline constituting a pipeline facility by executing a simulation. The simulation executing unit 11 is also able to configure simultaneous differential equations, based on propagation characteristics of each of pipelines, in place of configuring an electric circuit network from a pipeline facility. In this case, the simulation executing unit 11 calculates pressure oscillations by numerical calculation of the simultaneous differential equations.

The simulation executing unit 11 is also able to derive pressure oscillations of a pipeline by calculating an impulse response by using an existing fluid simulator. The simulation executing unit 11 is also able to execute a simulation of pressure oscillations in cooperation with another simulator, which is not illustrated in Fig. 2. In this case, the another simulator may be provided by another external computer.

The simulation executing unit 11 may correct a simulation parameter and repeat calculation in such a way that the parameter is approximated to a measured waveform input by the waveform input unit 15. Among pieces of information on a pipeline facility input from the input unit 14, it is often the case that an uncertain factor is included in customer's water use or the like. In order to estimate such a parameter, the simulation executing unit 11 changes a parameter in such a way that a pressure oscillation amplitude of a measured waveform at each of measurement positions coincide with a pressure oscillation amplitude acquired by a simulation. At this occasion, the parameter may be changed in such a way that an error of the amplitude is minimized by using a general optimization method. Thus, fluctuations of a pressure applied to each of pipes are derived. For example, a water pressure is applied from the inside of a pipeline such as a water pipe. The water pressure changes by consumer's water use, an operation of a pump, and the like. This means that a repetitive stress is applied to a pipe, when a pressure changes in a state that the pressure spreading from the inside to the outside is applied to a pipeline.

As described above, the fatigue cycle analyzing unit 12 calculates a fatigue cycle from pressure oscillations acquired by a simulation, and a measured waveform input from the waveform input unit 15. Specifically, first, the fatigue cycle analyzing unit 12 acquires, from pressure fluctuations acquired by a simulation, an amplitude of a pressure applied to each of pipelines.

Next, the fatigue cycle analyzing unit 12 calculates a normalized fatigue cycle by using a measured waveform input to the waveform input unit 15. **In** the present description, a normalized fatigue cycle is a fatigue cycle in which a magnitude of a pressure oscillation amplitude is aligned into a minimum unit (approximately 1). When calculating the normalized fatigue cycle, first, in order to align magnitudes of a measured waveform, the fatigue cycle analyzing unit 12 divides a measured waveform input to the waveform input unit 15 by a pressure oscillation amplitude of the measured waveform (the amplitude in this example is referred to as a mean square root amplitude), and converts the quotient into a measured waveform in which a vertical axis denotes a relative value with respect to a pressure oscillation amplitude, and a horizontal axis denotes a time. In the vertical axis of the measured waveform after conversion, there is no unit in a relative value with respect to a pressure oscillation amplitude. Thereafter, the fatigue cycle analyzing unit 12 counts the number of occurrences for each relative value of a stress amplitude at several points by a rainflow method (the relative value of the stress amplitude is a value acquired by dividing a stress amplitude by a pressure oscillation amplitude). Specifically, the fatigue cycle analyzing unit 12 calculates a normalized fatigue cycle by determining a magnitude of a stress contributing to the fatigue life (relative value of a stress amplitude), and the number of occurrences (number of repetitions). At this occasion, as far as a method for calculating a normalized fatigue cycle is available, the method is not limited to a rainflow method, and a level crossing method, a range pair count method, and the like may be used.

Next, the fatigue cycle analyzing unit 12 interpolates a normalized fatigue cycle relating to an unmeasured position. In this example, the fatigue cycle analyzing unit 12 applies a weight according to a pipeline length from a target position to a measured position nearby, and calculates a cycle number (number of occurrences) for each relative value of a stress amplitude, as exemplified by reverse distance weighted interpolation. As far as a method capable of interpolating a fatigue cycle at an unmeasured position is available, interpolation by triangulation interpolation or a spline method other than a reverse distance weighted interpolation method may be performed. Next, the fatigue cycle analyzing unit 12 multiplies a pressure fluctuation amplitude acquired by a simulation, by a relative value of a stress amplitude associated with the interpolated fatigue cycle (number of repetitions), and calculates a fatigue cycle at each of positions, for each magnitude of the stress amplitude after multiplication. Specifically, for example, it is assumed a case that a fatigue cycle associated with a relative value 1 of a stress amplitude is ten times, and a normalized fatigue cycle associated with a relative value 2 of a stress amplitude is five times. When a pressure fluctuation amplitude acquired by a simulation is 2, the fatigue cycle analyzing unit 12 multiplies the pressure fluctuation amplitude 2 acquired by the simulation, by a relative value of a stress amplitude associated with a normalized fatigue cycle. Consequently, the fatigue cycle analyzing unit 12 calculates a fatigue cycle for each stress amplitude in such a way that, when the stress amplitude is 2, the fatigue cycle is ten times, and when the stress amplitude is 4, the fatigue cycle is five times.

The index calculating unit 13 calculates an index of fatigue by the calculated fatigue cycle. A stress amplitude associated with a fatigue cycle calculated so far is a pressure oscillation amplitude. Herein, a stress generated in a pipeline constituting a pipeline facility is calculated according to Formula 1 by assuming that the pressure oscillation amplitude is a pressure P. When it is assumed that a diameter of a tubular pipeline is Di, a thickness thereof is Th, and the pressure P is applied to the pipeline, a stress $\sigma$ is generated in the pipeline in such a way as to stretch the pipeline along a circumferential direction (in such a way as to expand the diameter of the pipeline). The stress $\sigma$ is a stress generated in the pipeline. The stress $\sigma$ is referred to a hoop stress, and the stress $\sigma$ is calculated according to the following Formula 1.

$$[\mathrm{Formula\ 1}]$$

$$\sigma = \frac{P \cdot Di}{2 \cdot Th}$$

The index calculating unit 13 derives the hoop stress for each stress amplitude. In the present example embodiment, in order to secure safety of a system, a hoop stress, which is supposed to be a largest stress generated when a tubular object receives an internal pressure, is adopted as a stress being a factor of fatigue. Next, the index calculating unit 13 derives the number of times N until a failure occurs from each of hoop stresses. The number of times N may be data held in a database, or may be derived from an approximate expression of an S-N curve. For example, it is assumed that stress amplitudes $\sigma 1$, $\sigma 2$, ..., and $\sigma i$ are generated as a result of analyzing a stress waveform, and the number of repetitions until rupture (failure) occurs in this case is read from the S-N curve, and the number is set as N1, N2, ... , and Ni.

Next, the index calculating unit 13 derives an index D from a fatigue cycle n and the number of times N until a failure occurs. The index D is expressed by the following Formula 2. Herein, it is assumed that degrees of damage are n1/N2, n2/N2, ... , and ni/Ni, when stress amplitudes are respectively repeated n1, n2, ... , and ni times. A sum of the individual degrees of damage is set as an overall degree of damage, and the overall degree of damage is set as the index D. When D≥1, it is presumed that a fatigue failure occurs. Conversely, when D<1, it is presumed that a fatigue failure does not occur.

[Formula 2]

$$D = \frac{n_1}{N_1} + \frac{n_2}{N_2} + \frac{n_3}{N_3} + \cdots = \sum \frac{n_i}{N_i}$$

In other words, the index D is, as expressed by Formula 2, a sum of ratios of the "number of times ni a stress amplitude is repeated" with respect to the "number of repetitions Ni until rupture (failure) occurs in a fatigue test". The index calculating unit 13 can estimate a failure by using the index D. Therefore, the user is able to estimate a rupture risk of a pipeline, based on a calculation result by the index calculating unit 13, and is also able to determine an appropriate replacement timing and replacement order of the pipeline. Thus, the user is able to perform replacement of effectively reducing rupture of a pipeline.

As described above, in Formula 2, when "D≥1", fatigue rupture occurs. Therefore, it is possible to perform various evaluations by analyzing a stress waveform. Counting a stress amplitude per unit time and the number of occurrences, and calculating a time until D=1 is achieved enables estimating the remaining life of a pipeline in terms of time. Specifically, when fluctuations of a hoop stress respectively occur "Δn1, Δn2, Δn3, ... , and Δni" times in a state that a current degree of fatigue is D and during a measured time Δt (unit time) at a current time, first, the index calculating unit 13 calculates a rate of increase "ΔD/Δt" of a degree of fatigue per unit time by using the following Formula 3.

[Formula 3]

$$\frac{\Delta D}{\Delta t} = \left( \frac{\Delta n_1}{N_1} + \frac{\Delta n_2}{N_2} + \frac{\Delta n_3}{N_3} + \cdots \right) \frac{1}{\Delta t} = \frac{1}{\Delta t} \sum \frac{\Delta n_i}{N_i}$$

In the above-described Formula 3, since a time (remaining life) t' until "D=1" is achieved is "D+ΔD/Δt×t'=1", the index calculating unit 13 calculates the time (remaining life) t' by using the following Formula 4.

[Formula 4]

$$t' = \frac{\Delta t(1 - D)}{\sum \frac{\Delta n_i}{N_i}}$$

Thereafter, as described above, the output unit 16 outputs, to the outside, the index D calculated by the index calculating unit 13, as an analysis result. Herein, the output unit 16 may output not only the calculated index but also a fatigue cycle itself acquired by the fatigue cycle analyzing unit 12. The output unit 16 is also able to output image data of an image in which a difference in stress is visually expressed in such a way that the user can visually recognize a stress for each of pipelines.

[Device Operation]

Next, an operation of the pipeline diagnosing device 10 according to the first example embodiment is described with reference to Fig. 3. Fig. 3 is a flowchart illustrating an operation of the pipeline diagnosing device according to the first example embodiment of the present disclosure. In the following description, the configuration of Fig. 2 is referred to as necessary. In the first example embodiment, a pipeline diagnosing method is performed by operating the pipeline diagnosing device 10. Therefore, description on the pipeline diagnosing method according to the first example embodiment is replaced by the following description on an operation of the pipeline diagnosing device 10.

As illustrated in Fig. 3, first, the input unit 14 receives pipeline information from the outside, and inputs, to the simulation executing unit 11, the received pipeline information (Step A1). The waveform input unit 15 inputs, to the fatigue cycle analyzing unit 12, a measured waveform of a pressure at each of measurement positions (Step A2).

Next, the simulation executing unit 11 executes a simulation of pressure oscillations inside a pipeline constituting a pipeline facility, based on the pipeline information input from the input unit 14 in Step A1 (Step A3). Specifically, the simulation executing unit 11 configures an electric circuit equivalent to the pipeline facility by using the pipeline information. The simulation executing unit 11 executes a simulation by assuming that a voltage of the electric circuit is a pressure inside the pipeline.

Next, the fatigue cycle analyzing unit 12 calculates a fatigue cycle generated in the pipeline, based on the pressure oscillations acquired by the simulation in Step A3, and the measured waveform (Step A4).

Next, the index calculating unit 13 calculates an index from a fatigue cycle of each of pipes (Step A5). Thereafter, the output unit 16 outputs, to the outside, the index calculated by the index calculating unit 13 in Step A5, as an analysis result (Step A6). Specifically, the output unit 16 outputs a calculation result to a terminal device (not illustrated) connected to the pipeline diagnosing device 10, or a display device (not illustrated) connected to the pipeline diagnosing device 10.

As described above, the pipeline diagnosing device 10 described in the first example embodiment calculates a degree of fatigue generated in a pipeline. Therefore, the pipeline diagnosing device 10 is able to estimate a rupture risk of a pipeline by allowing a user to refer to a result of the calculation, and is also able to determine an appropriate replacement timing and replacement order of the pipeline. Thus, the pipeline diagnosing device 10 according to the first example embodiment is able to promote replacement of effectively reducing rupture of a pipeline.

[Pipeline Diagnosing Program]

A pipeline diagnosing program according to the first example embodiment may be a pipeline diagnosing program causing a computer to execute Steps A1 to A6 illustrated in Fig. 3. Installing and executing the pipeline diagnosing program in a computer enables achieving the pipeline diagnosing device 10 and the pipeline diagnosing method according to the first example embodiment. In this case, a central processing unit (CPU) of the computer causes the simulation executing unit 11, the fatigue cycle analyzing unit 12, the index calculating unit 13, the input unit 14, the waveform input unit 15, and the output unit 16 to function, and causes each of the units to perform processing.

The pipeline diagnosing program according to the first example embodiment may be executed by a computer system constituted of a plurality of computers. In this case, for example, each of the computers may cause any one of the simulation executing unit 11, the fatigue cycle analyzing unit 12, the index calculating unit 13, the input unit 14, the waveform input unit 15, and the output unit 16 to function.

(Second Example Embodiment)

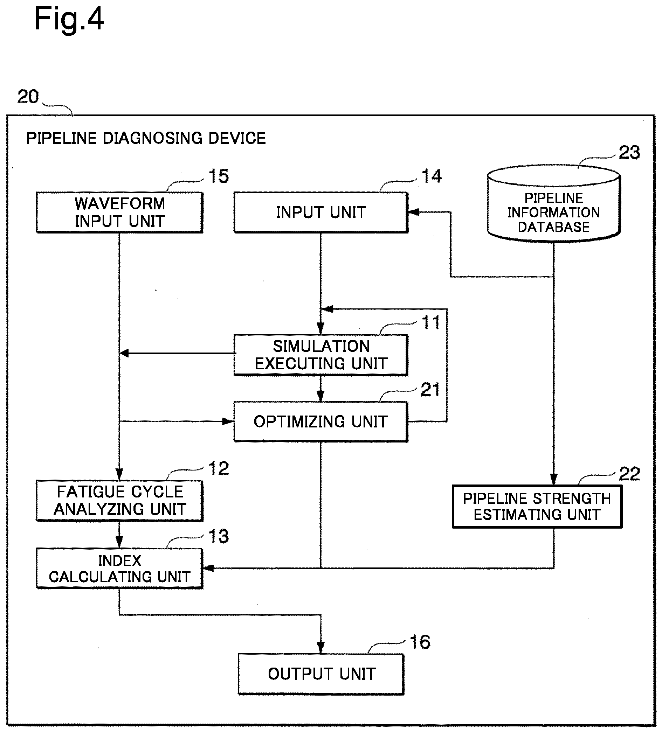

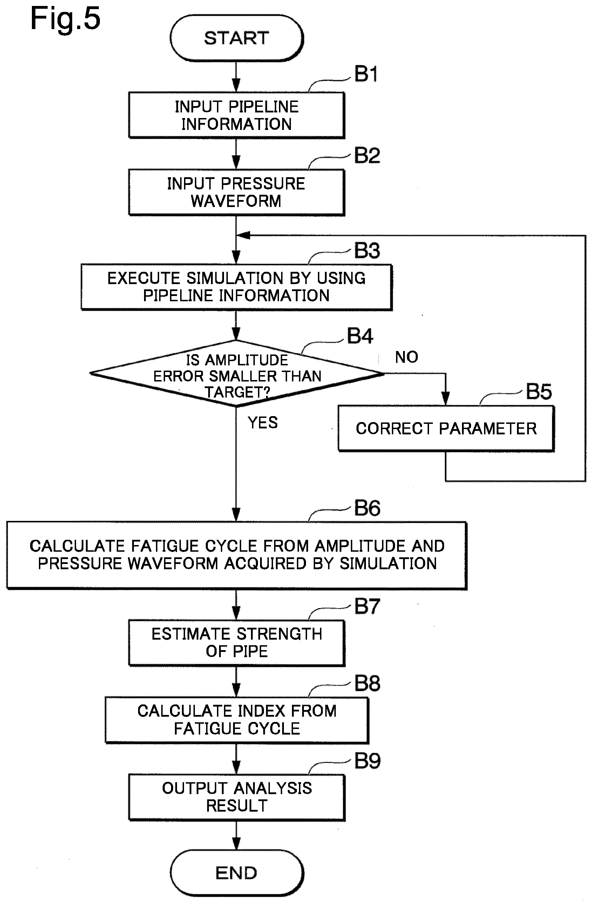

Next, a pipeline diagnosing device, a pipeline diagnosing method, and a pipeline diagnosing program according to a second example embodiment are described with reference to Figs. 4 and 5. In the second example embodiment, an asset management device according to the example embodiment of the present disclosure is also described.

[Device Configuration]

Fig. 4 is a block diagram specifically illustrating a configuration of a pipeline diagnosing device according to the second example embodiment of the present disclosure.

As illustrated in Fig. 4, similarly to the pipeline diagnosing device 10 according to the first example embodiment illustrated in Fig. 2, a pipeline diagnosing device 20 according to the second example embodiment includes a simulation executing unit 11, a fatigue cycle analyzing unit 12, an index calculating unit 13, an input unit 14, a waveform input unit 15, and an output unit 16. However, in the second example embodiment, the pipeline diagnosing device 20 is different in the following point. In the following, description is made mainly on a difference with respect to the first example embodiment.

As illustrated in Fig. 4, the pipeline diagnosing device 20 according to the second example embodiment includes, in addition to a configuration similar to the pipeline diagnosing device 10, an optimizing unit 21, a pipeline strength estimating unit 22, and a pipeline information database 23.

The optimizing unit 21 changes an analysis parameter in such a way that a simulation result coincides with an input measured waveform, and operates in such a way that an error between a simulation and a measurement is minimized. Among analysis parameters, it is difficult to acquire fluctuations of an amount of water use by a customer being a pressure fluctuation source. In view of the above, in order to estimate this parameter, the optimizing unit 21 derives a pressure oscillation amplitude at each of positions, based on a measured waveform.

The optimizing unit 21 further derives an error between the pressure oscillation amplitude, and an amplitude acquired by using the simulation result, and corrects the parameter in such a way that the error is minimized. For parameter correction, a Nelder-Mead method or the like is employed. As another parameter correcting method for minimizing the error, an algorithm of an optimization problem may be employed, or a particle swarm optimization method or a genetic algorithm may be employed. Thus, in the optimizing unit 21, simulation accuracy is enhanced, and estimation more analogous to an actual state can be performed.

The pipeline information database 23 stores pipeline information to be used by the simulation executing unit 11. The pipeline information stored in the pipeline information database 23 includes information similar to the pipeline information described in the first example embodiment. In the present example embodiment, the input unit 14 inputs, to the simulation executing unit 11, pipeline information acquired from the pipeline information database 23.

In the example of Fig. 4, the pipeline information database 23 is configured inside the pipeline diagnosing device 20. Alternatively, in the present example embodiment, the pipeline information database 23 may be provided by an external computer. For example, as the pipeline information database 23, a database to be provided by a geographic information system (GIS) may be employed.

The pipeline information database 23 also stores strength data of a pipeline. The strength data are data indicating a strength of a target pipeline. As a method for measuring a strength of a pipeline, a method for directly measuring a pipe thickness, a magnetic flux leakage (MFL) method for measuring a strength by a magnetic field sensor, a remote field eddy current (RFEC) method for measuring eddy current, a broadband electromagnetic (BEM) method, and the like are exemplified. However, when these methods are put into practice, it is necessary to excavate the ground around a location where a pipeline is embedded in advance.

For example, PTL 4 discloses a method for measuring a strength of a pipeline in a state that the pipeline is embedded, without excavating the ground. PTL 4 exemplifies a method for estimating a pipe thickness from a speed of sound, a method for roughly estimating a deterioration state of a pipe by inserting a camera into a pipeline and observing a surface of a pipe wall, and the like.

The pipeline information database 23 may store, in addition to the above-described pipeline information and strength data, information for specifying a material, a distance, an embedded time, a place, and the like of each of pipelines. The pipeline information database 23 may further store, based on experimental data or document information, data of an S-N curve indicating a strength of a pipeline, for each of materials and apertures of a pipeline. As the S-N curve, it is preferable to store both data of a new pipeline and a deteriorated pipeline. In this case, particularly, an S-N curve of a deteriorated pipeline is stored in association with a degree of strength of a pipeline associated with the deteriorated pipeline.

The pipeline strength estimating unit 22 estimates a strength of a pipeline constituting a pipeline facility. Specifically, the pipeline strength estimating unit 22 estimates, based on information stored in the pipeline information database 23, a strength of a target pipeline, and outputs an S-N curve. The pipeline strength estimating unit 22 selects or generates an S-N curve associated with a measurement result of a pipeline the strength of which is directly measured. The pipeline strength estimating unit 22 generates an S-N curve of a target pipeline regarding a pipeline the strength of which is not directly measured, based on an S-N curve of a pipeline having a same material and a same aperture as those of the target pipeline by using the pipeline information database 23.

When an S-N curve of a pipeline having a same material and a same aperture as those of a target pipeline is not stored in the pipeline information database 23, the pipeline strength estimating unit 22 calculates, from an S-N curve of a pipeline having a same material but having a different aperture, an S-N curve of the target pipeline. When a strength of the target pipeline is not measured, the pipeline strength estimating unit 22 is able to estimate a degree of deterioration from years elapsed after the target pipeline has been embedded, and the average life of a pipeline, and generate an S-N curve of the target pipeline, based on the estimated degree of deterioration.

[Device Operation]

Next, an operation of the pipeline diagnosing device 20 according to the second example embodiment is described with reference to a flowchart of Fig. 5. In the following description, Fig. 4 is referred to as necessary. In the second example embodiment, a pipeline diagnosing method is performed by operating the pipeline diagnosing device 20. Therefore, description on the pipeline diagnosing method according to the second example embodiment is made by the following description on an operation of the pipeline diagnosing device 20.

As illustrated in Fig. 5, first, the input unit 14 acquires pipeline information from the pipeline information database 23, and inputs the acquired pipeline information to the simulation executing unit 11 (Step B1).

The waveform input unit 15 inputs, to the fatigue cycle analyzing unit 12 and the optimizing unit 21, a measured waveform acquired from a sensor or the like (Step B2).

Next, the simulation executing unit 11 executes a simulation of pressure oscillations inside a pipeline constituting a pipeline facility, based on the pipeline information input from the input unit 14 in Step B1 (Step B3). Step B3 is a step similar to Step A3 illustrated in Fig. 3.

Next, the optimizing unit 21 calculates an error between a pressure oscillation amplitude acquired by the simulation of Step B3 and a pressure oscillation amplitude of the measured waveform the input of which is received in Step B2, and determines whether the error is smaller than a target value (Step B4). When the error is larger than the target value, the optimizing unit 21 corrects the simulation parameter (Step B5). Then, the simulation executing unit 11 performs a simulation again (Step B3). When the error becomes smaller than the target value by repeating these steps B3 to B5, processing proceeds to next Step B6.

Next, the fatigue cycle analyzing unit 12 calculates, based on the pressure oscillations acquired by the simulation of Step B3, and the measured waveform the input of which is received in Step B2, a fatigue cycle generated in the pipeline constituting the pipeline facility (Step B6). Next, the pipeline strength estimating unit 22 estimates a strength of the pipeline constituting the pipeline facility (Step B7). Specifically, the pipeline strength estimating unit 22 estimates, based on the information stored in the pipeline information database 23, a strength of the target pipeline, and outputs an S-N curve.

Next, the index calculating unit 13 calculates an index indicating a failure risk by using the analysis result of Step B3, and the S-N curve of the target pipeline estimated in Step B7 (Step B8). In Step B8, the index calculating unit 13 also calculates the remaining life of the pipeline. Next, the output unit 16 outputs, to the outside, the failure risk and the remaining life calculated by the index calculating unit 13, as an analysis result (Step B9). Specifically, the output unit 16 outputs, to a terminal device connected to the pipeline diagnosing device 10, or a display device connected to the pipeline diagnosing device 10, the failure risk and the remaining life.

The pipeline diagnosing device 20 according to the second example embodiment as described above is able to estimate a possibility of rupture of a pipeline by deriving a degree of progress of deterioration of the pipeline in the future, and is also able to determine an appropriate replacement timing and replacement order of the pipeline. Consequently, the above-described pipeline diagnosing device 20 is able to efficiently suppress occurrence of a failure of a pipeline facility.

[Pipeline Diagnosing Program]

The pipeline diagnosing program according to the second example embodiment may be a pipeline diagnosing program causing a computer to execute Steps B1 to B9 illustrated in Fig. 5. Installing and executing the pipeline diagnosing program in a computer enables achieving an operation of the pipeline diagnosing device 20 and the pipeline diagnosing method according to the second example embodiment. In this case, a central processing unit (CPU) of the computer causes the simulation executing unit 11, the fatigue cycle analyzing unit 12, the index calculating unit 13, the input unit 14, the waveform input unit 15, the output unit 16, the optimizing unit 21, and the pipeline strength estimating unit 22 to function, and causes each of the units to perform processing.

The pipeline diagnosing program according to the second example embodiment may be executed by a computer system constituted of a plurality of computers. In this case, for example, each of the computers may function as any one of the simulation executing unit 11, the fatigue cycle analyzing unit 12, the index calculating unit 13, the input unit 14, the waveform input unit 15, the output unit 16, the optimizing unit 21, and the pipeline strength estimating unit 22.

(Specific Example)

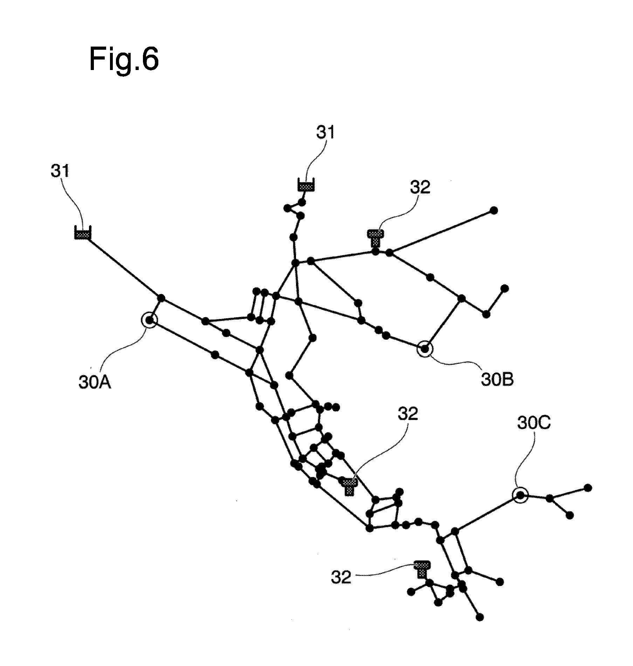

Next, an example embodiment of a pipeline method is specifically described together with an operation of the pipeline diagnosing device 20 according to the above-described second example embodiment with reference to Figs. 6 to 9. First, in the present specific example, it is assumed that a database to be provided by a geographic information system (GIS) is employed as the pipeline information database 23. The database stores information on a water pipe network, specifically, a length, a material, an aperture, a distance, an embedded year, a place, and the like of a pipeline present in the water pipe network.

The database also stores connection information of a water source and a tank, and a mounted position of a pressure sensor. Fig. 6 is a pipeline network illustrating one example of connection information stored in the database of the geographic information system. The database also stores data indicating a relation among a material and an aperture of a pipe, and a propagation speed of pressure oscillations, and strength data; and further stores an analysis condition such as a frequency to be analyzed. A user selects a water supply network on the geographic information system via the input unit 14, and instructs the pipeline diagnosing device 20 to analyze.

The waveform input unit 15 is a pressure sensor, and is mounted at a sensor position in Fig. 6 (as one example, Fig. 6 illustrates sensors 30A to 30C). These sensors 30A to 30C measure a daily pressure inside a pipeline, and stores the measured pressures as measured waveforms. The simulation executing unit 11 converts the water pipe network into an electric circuit network, based on pipeline information. In Fig. 6, a reference sign 31 denotes a water source located upstream of a pipeline, and the reference sign 32 denotes a tank provided on a midway of the pipeline.

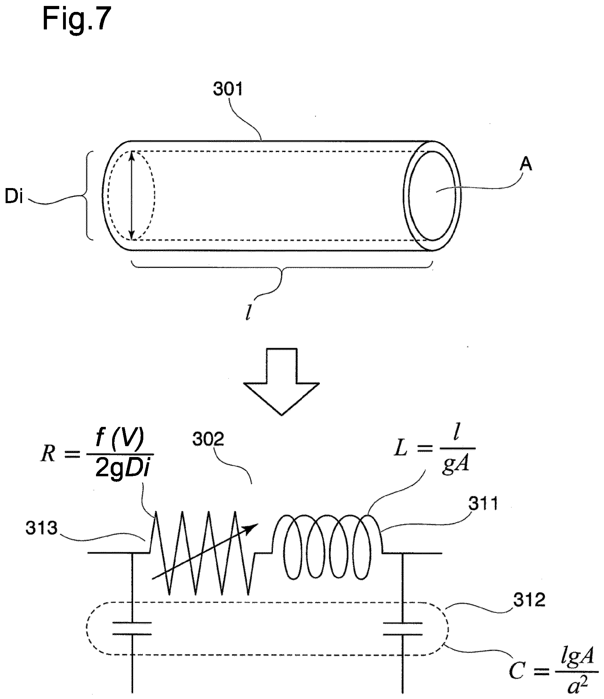

In this example, conversion from a water pipe network into an electric circuit network is described with reference to Fig. 7. As illustrated in Fig. 7, expressing a water pipe network by using an electric circuit network is enabled by comparing a relationship between a pressure and a flow rate of fluid flowing through a pipe 301 with a relationship between a voltage and electric current. For example, as illustrated in Fig. 7, the one pipe 301 constituting a pipe network can be associated with an electric circuit 302 constituted of a coil 311, a capacitor 312, and a resistance 313.

Specifically, for example, the pipe 301 connecting two points can be expressed by the electric circuit 302. At this occasion, an inductance L of the coil 311, a capacitance C of the capacitor 312, and a resistance value R of the resistance 313 in the electric circuit 302 are respectively derived by the following Formula 5.

$$[\text{Formula 5}]$$

$$L \ = \ \frac{l}{gA} \text{、} \ C = \frac{l\,g\,A}{a^2} \text{、} \ R \ = \ \frac{f(V)}{2gDi}$$

a: propagation speed of pressure oscillations
g: gravitational acceleration
A: cross-sectional area of pipe
l: pipe length
V: speed of water
Di: diameter of pipe
f(V): pressure loss

The propagation speed a of pressure oscillations in Formula 5 is calculatable by acquiring a material and an aperture of a pipe from the pipeline information database 23, and using the acquired numerical values. The simulation executing unit 11 is also able to use an electric element which expresses a magnitude (pressure loss) of a pressure, which is lost by the resistance 313, in place of the resistance 313. In the simulation executing unit 11, when it is assumed that a pressure loss is P, P is expressed by the following Formula 6 on the basis of the Hazen Williams formula.

$$[\text{Formula 6}]$$

$$P \ = \ \frac{10.67lQ^{1.85}}{C_Q{}^{1.85}Di^{4.87}}$$

P: pressure loss (head loss)
$C_Q$: flow rate (flow velocity) coefficient
Di: diameter of pipe
l: pipe length
Q: flow rate (derived from a product of a flow velocity and a cross-sectional area of a pipe)

In the above-described Formula 6, the flow rate coefficient indicates easiness of flow of fluid inside a pipe according to the Hazen Williams formula, and is a coefficient determined according to a material of a pipeline and a degree of aging change. However, the above-described Formula 6 is an example in which fluid flowing through the pipe 301 is water. A formula for expressing a pressure loss is not limited to the above-described Formula 6. An appropriate formula may be employed as a formula for expressing a pressure loss according to a type of fluid and various conditions.

The simulation executing unit 11 sets a customer, as a signal source which causes water pressure fluctuations. Since a magnitude of the signal source is an uncertain factor, a magnification factor, for which parameter adjustment is performed by optimization at a later stage, is set at each of nodes, as an initial value 1. The simulation executing unit 11 sets an electric current source having a magnitude in proportion to the number of customers and the magnification factor at each of the nodes by using these parameters. The simulation executing unit 11 inputs, to the generated electric circuit network, data for simulation. As the data to be input, a frequency to be analyzed and the like are exemplified.

The simulation executing unit 11 executes an analysis (a small signal analysis method) using an input signal having a small amplitude, for example, by using an electric circuit network, and analyzes propagation characteristics at each of frequencies. In this example, the small signal analysis method is an analysis method capable of defining, as a linear element, a non-linear element in an electric circuit network by assuming that an amplitude of an input signal is small. In the small signal analysis method, a small signal model constituted of a linear element is presumed, based on an assumption that an amplitude of an input signal is small. The small signal analysis method is able to calculate an output with respect to a voltage at a designated frequency.

Next, the optimizing unit 21 acquires data of the sensors 30A to 30C from the waveform input unit 15. The optimizing unit 21 performs Fourier transform with respect to waveforms being the data of the sensors 30A to 30C, and converts the waveforms into frequency characteristics. The optimizing unit 21 derives a mean square root error between frequency characteristics at measurement nodes where the sensors 30A to 30C are mounted, and simulation results at nodes to which the sensors 30A to 30C are connected. When the error is larger than a target value, the optimizing unit 21 optimizes, based on the error, the magnification factor set in the simulation executing unit 11 by using a system for solving an optimization problem (e.g. an optim function (optimization function) of an R language, or the like). For example, $1mH_2O$ (a water column meter, that is a pressure generated by water at a depth of 1m) is set as the target value. The optimizing unit 21 repeats parameter adjustment by the optimization. Specifically, the optimizing unit 21 executes parameter adjustment by optimization until the error becomes equal to or smaller than the target value, or reaches a repetition upper limit set in advance.

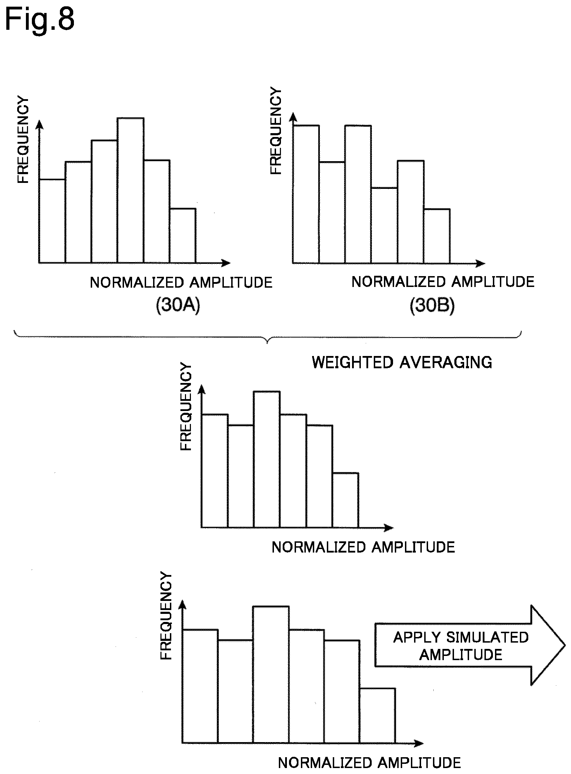

Next, the fatigue cycle analyzing unit 12 calculates a fatigue cycle at each of points, calculates a mean square root amplitude with respect to a measured waveform at each of measurement nodes acquired by the waveform input unit 15 (see the upper row in Fig. 8), divides the measured waveform by the mean square root amplitude, and performs normalization (see the middle row in Fig. 8). Thereafter, the index calculating unit 13 calculates an occurrence frequency of each of the amplitudes by a rainflow method, based on the normalized waveform (see the lower row in Fig. 8), and calculates an occurrence frequency of each of the amplitudes at each of nodes of an unmeasured portion by using a result of the calculation.

First, the fatigue cycle analyzing unit 12 tracks a pipe, and finds a plurality of measurement nodes having a similar pipe length for each of the nodes. The fatigue cycle analyzing unit 12 applies a weight (e.g. a weight in proportion to an inverse number of a pipe length) to a frequency of each of the amplitudes at the measurement nodes having the similar pipe length according to the inverse number of the pipe length, and performs averaging. Thus, the fatigue cycle analyzing unit 12 derives the number of repetitions (normalized fatigue cycle) for each relative value of a stress amplitude at each of the nodes (as described above, the relative value of the stress amplitude is a value acquired by dividing a stress amplitude by a pressure oscillation amplitude). The fatigue cycle analyzing unit 12 multiplies an amplitude by water pressure fluctuations at each of the nodes derived by the simulation of the simulation executing unit 11 and the optimizing unit 21, by the number of repetitions (normalized fatigue cycle) for each relative value of a stress amplitude at each of the nodes, and derives a fatigue cycle at the target position, for each magnitude of the stress amplitude after multiplication. Specifically, an amplitude derived by the simulation is multiplied by a value, which is acquired by averaging a relative value of a stress amplitude associated with a fatigue cycle (number of repetitions), and a fatigue cycle at each of the positions is calculated for each magnitude of the stress amplitude after multiplication. For example, it is assumed a case that a fatigue cycle associated with a relative value 1 of a stress amplitude is ten times, and a fatigue cycle associated with a relative value 2 of a stress amplitude is five times. At this occasion, when a pressure fluctuation amplitude acquired by the simulation is 2, the fatigue cycle analyzing unit 12 multiplies the pressure fluctuation amplitude 2 acquired by the simulation, by a relative value of a stress amplitude associated with a normalized fatigue cycle. Consequently, the fatigue cycle analyzing unit 12 calculates a fatigue cycle for each stress amplitude in such a way that, when the stress amplitude is 2, the fatigue cycle is ten times, and when the stress amplitude is 4, the fatigue cycle is five times.

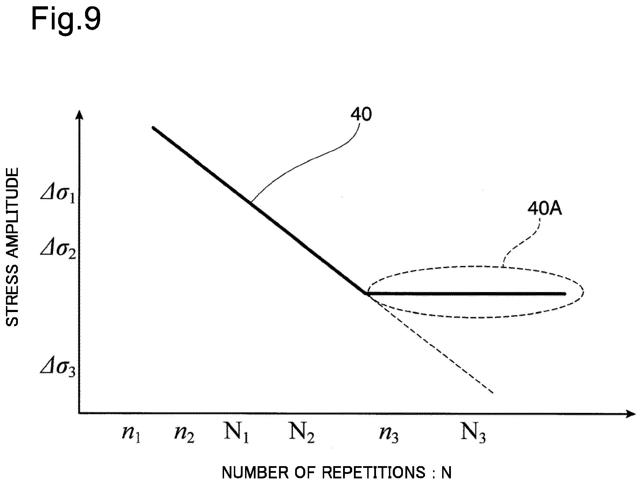

Next, the pipeline strength estimating unit 22 acquires, from the pipeline information database 23, an S-N curve illustrated in Fig. 9, for example, as strength data 40 of a pipeline. The S-N curve illustrated in Fig. 9 illustrates a relation between a stress amplitude and the number of repetitions. Specifically, in Fig. 9, a stress amplitude is set on a vertical axis, and the number of repetitions is set on a horizontal axis. In the S-N curve, there is a case that, when a stress amplitude being a load is lowered, the curve is bent at a certain stress amplitude (e.g. around $10^6$ times to $10^7$ times), becomes horizontal, and has a lower limit of a repetitive stress at which destruction does not occur any more, even when a stress is repeated infinite times. The stress in this case is referred to as a fatigue limitation, a fatigue limit, or an endurance limit. The fatigue limitation is a maximum value of stress at which destruction by fatigue does not occur any more, even when a repetitive stress is applied to a solid material. Fig. 9 illustrates that a fatigue limitation is present in a pipeline in an area 40A of the strength data 40 where the number of repetitions becomes large.

The index calculating unit 13 calculates an index of fatigue by the fatigue cycle calculated by the fatigue cycle analyzing unit 12. As described above, a stress amplitude of a fatigue cycle is a pressure oscillation amplitude. As described above, a stress generated in a pipeline constituting a pipeline facility is calculated by using Formula 1 by assuming that a pressure oscillation amplitude is the pressure P. Specifically, a stress σ generated in a pipeline constituting a pipeline facility is derived by substituting the diameter Di and the thickness Th of each of pipes, and the pressure P by a derived water pressure. The fatigue cycle analyzing unit 12 calculates the number of times of stress application up to now by assuming that a same stress has continued to be applied, from a time relating to measurement data in use and the installation year of the pipe. By collating between the stress amplitude and the S-N curve acquired by the pipeline strength acquiring unit 22, an endurable number of repetitions is acquired. Thereafter, the index calculating unit 13 calculates the index D by using Formula 2, based on the number of repetitions and the calculated number of repetitions. For example, the output unit 16 presents the user with a failure risk by outputting, as a list, a pipeline having a large failure risk (e.g. a pipeline in which the remaining endurable number of repetitions is equal to or smaller than a threshold value).

(Physical Configuration)

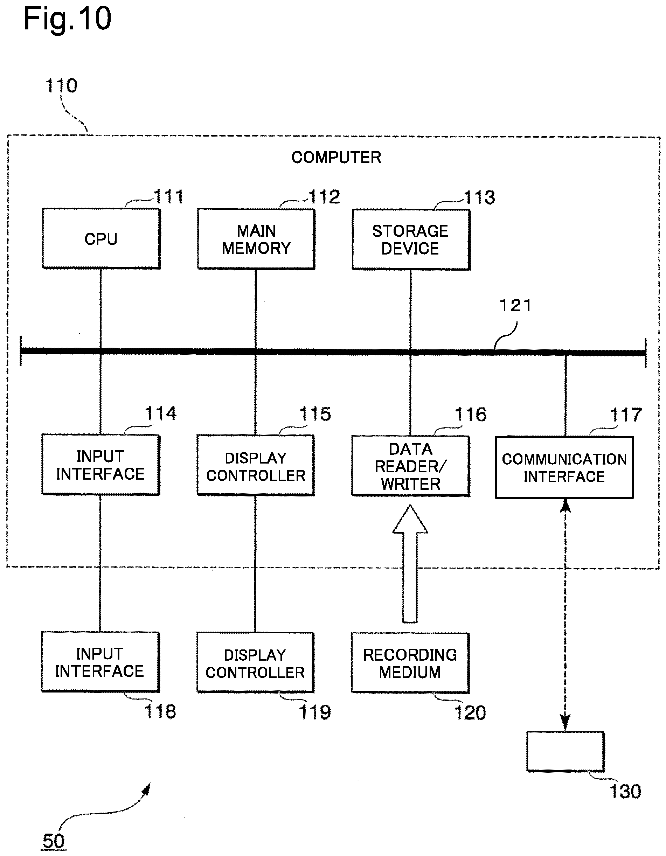

A computer which achieves a pipeline diagnosing device by executing the pipeline diagnosing program according to the first and second example embodiments is described with reference to Fig. 10. Fig. 10 is a block diagram illustrating one example of a computer which achieves the pipeline diagnosing device according to the first and second example embodiments of the present disclosure. In the present example embodiment, it is also possible to achieve an asset management device 50 by the computer illustrated in Fig. 10.

As illustrated in Fig. 10, a computer 110 of the asset management device 50 includes a CPU 111, a main memory 112, a storage device 113, an input interface 114, a display controller 115, a data reader/writer 116, and a communication interface 117. These units are connected to each other via a bus 121 in such a way that data are communicable.

The CPU 111 executes various computations by expanding a pipeline diagnosing program (codes) stored in the storage device 113 in the main memory 112, and executing the codes in a predetermined order. The main memory 112 is typically a volatile storage device such as a dynamic random access memory (DRAM). The pipeline diagnosing program according to the present example embodiment is provided, for example, in a state that the pipeline diagnosing program is stored in a computer-readable recording medium 120. The pipeline diagnosing program according to the present example embodiment may be a program distributed on the Internet connected via the communication interface 117.

As a specific example of the storage device 113, a semiconductor storage device such as a flash memory is exemplified, in addition to a hard disk drive. The input interface 114 mediates data transmission between the CPU 111 and input equipment 118 such as a keyboard or a mouse. The display controller 115 is connected to a display device 119, and controls display of the display device 119.

The data reader/writer 116 mediates data transmission between the CPU 111 and the recording medium 120. The data reader/writer 116 reads the pipeline diagnosing program from the recording medium 120, and writes a processing result of the computer 110 in the recording medium 120. The communication interface 117 mediates data transmission between the CPU 111 and another computer 130.

As a specific example of the recording medium 120, a general-purpose semiconductor storage device such as compact flash (CF) (registered trademark) and secure digital (SD), a magnetic recording medium such as a flexible disk, or an optical recording medium such as a compact disk read only memory (CD-ROM) is exemplified.

It is also possible to achieve the pipeline diagnosing device 10 according to the present example embodiment not only by a computer in which the pipeline diagnosing program is installed, but also by using a hardware associated with each of the units. A part of the pipeline diagnosing device 10 may be achieved by the pipeline diagnosing program, and the remaining part thereof may be achieved by a hardware.

While the invention has been particularly shown and described with reference to exemplary embodiments (and examples) thereof, the invention is not limited to these embodiments (and examples).

This application is based upon and claims the benefit of priority from Japanese patent application No. 2018-043221, filed on March 9, 2018.

**[Industrial Applicability]**

The present disclosure is able to estimate progress of deterioration of a pipeline in the future in a pipeline facility. The present disclosure is useful in a system for distributing fluid in a pipeline network, for example, a pipeline network system for distributing purified water from a water purification plant, a pipeline for feeding petroleum/gas, and the like.

[Reference signs List]

| | |
|---|---|
| 10 | Pipeline diagnosing device |
| 11 | Simulation executing unit |
| 12 | Fatigue cycle analyzing unit |
| 13 | Index calculating unit |
| 14 | Input unit |
| 15 | Waveform input unit |
| 16 | Output unit |
| 20 | Pipeline diagnosing device |
| 21 | Optimizing unit |
| 22 | Pipeline strength estimating unit |
| 23 | Pipeline information database |
| 30A | Pressure sensor |

| 30B | Pressure sensor |
|---|---|
| 30C | Pressure sensor |
| 31 | Water source |
| 32 | Tank |
| 40 | Strength data |
| 50 | Asset management device |
| 100 | Pipeline diagnosing device |
| 110 | Computer |
| 111 | CPU |
| 112 | Main memory |
| 113 | Storage device |
| 114 | Input interface |
| 115 | Display controller |
| 116 | Data reader/writer |
| 117 | Communication interface |
| 118 | Input equipment |
| 119 | Display device |
| 120 | Recording medium |
| 121 | Bus |
| 130 | Another computer |
| 301 | Pipe |
| 302 | Equivalent circuit model of pipeline |
| 311 | Coil |
| 312 | Capacitor |
| 313 | Variable resistance |

**Claims**

1. A pipeline diagnosing device comprising:

   simulation executing means (11) for configuring an electric circuit equivalent to a pipeline facility to be diagnosed by using pipeline information for specifying a configuration of the pipeline facility, and executing a simulation of pressure oscillations inside a pipeline of the pipeline facility by assuming that a voltage of the electric circuit is a pressure inside the pipeline and an electric current is a flow rate of fluid flowing through the pipeline;

   waveform input means (15) for receiving measurement data on a measured waveform that is a timewise change of the pressure inside the pipeline, the measurement data being data measured by a sensor connected to the pipeline;

   **characterized in that** it further comprises:

   fatigue cycle analyzing means (12) for calculating, based on the pressure oscillations acquired by the simulation and the measured waveform, a fatigue cycle of the pipeline that is a number of occurrences for each of different stress amplitudes; and

   index calculating means (13) for calculating an index indicating a failure risk of the pipeline from the fatigue cycle for each of different stress amplitudes and a number of occurrences for said stress amplitude until failure occurs, the number of occurrences being determined from an S-N curve,

   wherein the fatigue cycle analyzing means (12) is configured to

   acquire, from the pressure oscillations acquired by the simulation, a pressure oscillation amplitude,

   divide the measured waveform by a mean square root amplitude of the measured waveform, thereby acquiring a converted measured waveform,

   count a number of occurrences for a relative value of each of different stress amplitudes using the converted measured waveform, the relative value of each of different stress amplitudes being a value acquired by dividing said stress amplitude by the mean square root amplitude, and multiply the relative value of each of different stress amplitudes associated with the counted number of occurrences by the acquired pressure oscillation amplitude, thereby calculating an amplitude, and determine the counted number of occurrences as the fatigue cycle for the calculated amplitude.

2. The pipeline diagnosing device according to claim 1, wherein
   the fatigue cycle analyzing means calculates, based on an amplitude acquired by the simulation and a fatigue cycle at a measurement position nearby, a stress amplitude and a fatigue cycle at a position other than the measurement position.

3. The pipeline diagnosing device according to claim 1 or 2, wherein
the pipeline facility is a water pipe network, and the pipeline information is water pipe network information held in a geographic information system.

4. The pipeline diagnosing device according to any one of claims 1 to 3, wherein
the simulation executing means performs optimization in such a way that an amplitude of a measurement result of the pressure coincides with an amplitude acquired by the simulation.

5. The pipeline diagnosing device according to any one of claims 1 to 4,
wherein the fatigue cycle analyzing means is configured to count the number of occurrences for the relative value of each of different stress amplitudes by applying a rainflow method, a level crossing method, or a range pair count method to the converted measured waveform.

6. A computer implemented pipeline diagnosing method comprising:

configuring an electric circuit equivalent to a pipeline facility to be diagnosed by using pipeline information (A1) for specifying a configuration of the pipeline facility, and executing a simulation (A3) of pressure oscillations inside a pipeline of the pipeline facility by assuming that a voltage of the electric circuit is a pressure inside the pipeline and an electric current is a flow rate of fluid flowing through the pipeline;
receiving (A2) measurement data on a measured waveform that is a timewise change of the pressure inside the pipeline, the measurement data being data measured by a sensor connected to the pipeline;
the method **characterized by**:

calculating, based on the pressure oscillations acquired by the simulation and the measured waveform, a fatigue cycle (A4) of the pipeline that is a number of occurrences for each of different stress amplitudes; and calculating an index (A5) indicating a failure risk of the pipeline from the fatigue cycle for each of different stress amplitudes and a number of occurrences for said stress amplitude until failure occurs, the number of occurrences being determined from an S-N curve,
wherein the calculating comprises:

acquiring, from the pressure oscillations acquired by the simulation, a pressure oscillation amplitude, dividing the measured waveform by a mean square root amplitude of the measured waveform, thereby acquiring a converted measured waveform,
counting a number of occurrences for a relative value of each of different stress amplitudes using the converted measured waveform, the relative value of each of different stress amplitudes being a value acquired by dividing said stress amplitude by the mean square root amplitude, and
multiplying the relative value of each of different stress amplitudes associated with the counted number of occurrences by the acquired pressure oscillation amplitude, thereby calculating an amplitude, and determine the counted number of occurrences as the fatigue cycle for the calculated amplitude.

7. A pipeline diagnosing program causing a computer to execute the method according to claim 6.

**Patentansprüche**

1. Rohrleitungsdiagnosevorrichtung, umfassend:

eine Simulationsausführungseinrichtung (11) zum Konfigurieren einer elektrischen Schaltung entsprechend einer zu diagnostizierenden Rohrleitungsanlage durch Verwenden von Rohrleitungsinformation zum Spezifizieren einer Konfiguration der Rohrleitungsanlage und Ausführen einer Simulation von Druckschwingungen innerhalb einer Rohrleitung der Rohrleitungsanlage durch Annehmen, dass eine Spannung der elektrischen Schaltung ein Druck innerhalb der Rohrleitung ist und ein elektrischer Strom eine Durchflussrate von Flüssigkeit ist, die durch die Rohrleitung fließt;
eine Wellenformeingabeeinrichtung (15) zum Empfangen von Messdaten auf einer gemessenen Wellenform, die eine zeitliche Änderung des Drucks innerhalb der Rohrleitung ist, wobei die Messdaten durch einen mit der Rohrleitung verbundenen Sensor gemessene Daten sind;
**dadurch gekennzeichnet, dass** sie weiterhin folgendes umfasst:

eine Ermüdungszyklus-Analyseeinrichtung (12) zum Berechnen, basierend auf den durch die Simulation erlangten Druckschwingungen und der gemessenen Wellenform, eines Ermüdungszyklus der Rohrleitung, der eine Anzahl von Auftritten für jede von unterschiedlichen Stressamplituden ist; und
eine Indexberechnungseinrichtung (13) zum Berechnen eines Index, der ein Fehlerrisiko der Rohrleitung anzeigt, aus dem Ermüdungszyklus für jede der unterschiedlichen Stressamplituden und einer Anzahl von Auftritten für diese Stressamplitude bis zum Auftreten eines Fehlers, wobei die Anzahl von Auftritten aus einer S-N-Kurve bestimmt wird,
wobei die Ermüdungszyklus-Analyseeinrichtung (12) konfiguriert ist, um
aus den durch die Simulation erlangten Druckschwingungen eine Druckschwingungsamplitude zu erlangen, die gemessene Wellenform durch einen quadratischen Mittelwert der gemessenen Wellenform zu dividieren, um dadurch eine umgewandelte gemessene Wellenform zu erlangen,
eine Anzahl von Auftritten für einen relativen Wert von jeder von unterschiedlichen Stressamplituden unter Verwendung der umgewandelten gemessenen Wellenform zu zählen, wobei der relative Wert von jeder von unterschiedlichen Stressamplituden ein durch Dividieren der Stressamplitude durch den quadratischen Mittelwert erlangter Wert ist, und
den relativen Wert von jeder von unterschiedlichen Stressamplituden, die mit der gezählten Anzahl von Auftritten assoziiert sind, mit der erlangten Druckschwingungsamplitude zu multiplizieren, um dadurch eine Amplitude zu berechnen, und die gezählte Anzahl von Auftritten als den Ermüdungszyklus für die berechnete Amplitude zu bestimmen.

2. Rohrleitungsdiagnosevorrichtung nach Anspruch 1, wobei
die Ermüdungszyklus-Analyseeinrichtung, basierend auf einer durch die Simulation erlangten Amplitude und einem Ermüdungszyklus bei einer Messposition in der Nähe, eine Stressamplitude und einen Ermüdungszyklus bei einer Position, die eine andere als die Messposition ist, berechnet.

3. Rohrleitungsdiagnosevorrichtung nach Anspruch 1 oder 2, wobei
die Rohrleitungsanlage ein Wasserleitungsnetz ist und die Rohrleitungsinformation in einem geografischen Informationssystem aufbewahrte Wasserleitungsnetzinformation ist.

4. Rohrleitungsdiagnosevorrichtung nach einem der Ansprüche 1 bis 3, wobei
die Simulationsausführungseinrichtung eine Optimierung auf eine derartige Weise durchführt, dass eine Amplitude eines Messergebnisses des Drucks mit einer durch die Simulation erlangten Amplitude übereinstimmt.

5. Rohrleitungsdiagnosevorrichtung nach einem der Ansprüche 1 bis 4,
wobei die Ermüdungszyklus-Analyseeinrichtung konfiguriert ist, um die Anzahl von Auftritten für den relativen Wert von jeder von unterschiedlichen Stressamplituden durch Anwenden einer Rainflow-Methode, einer Methode der Überschreitungshäufigkeit von Klassengrenzen oder einer Spannweiten-Paarzähl-Methode auf die umgewandelte gemessene Wellenform zu zählen.

6. Computerimplementiertes Rohrleitungsdiagnoseverfahren, umfassend:

Konfigurieren einer elektrischen Schaltung entsprechend einer zu diagnostizierenden Rohrleitungsanlage durch Verwenden von Rohrleitungsinformation (A1) zum Spezifizieren einer Konfiguration der Rohrleitungsanlage und Ausführen einer Simulation (A3) von Druckschwingungen innerhalb einer Rohrleitung der Rohrleitungsanlage durch Annehmen, dass eine Spannung der elektrischen Schaltung ein Druck innerhalb der Rohrleitung ist und ein elektrischer Strom eine Durchflussrate von Flüssigkeit ist, die durch die Rohrleitung fließt;
Empfangen (A2) von Messdaten auf einer gemessenen Wellenform, die eine zeitliche Änderung des Drucks innerhalb der Rohrleitung ist, wobei die Messdaten durch einen mit der Rohrleitung verbundenen Sensor gemessene Daten sind;
wobei das Verfahren **gekennzeichnet ist durch**:

Berechnen, basierend auf den **durch** die Simulation erlangten Druckschwingungen und der gemessenen Wellenform, eines Ermüdungszyklus (A4) der Rohrleitung, der eine Anzahl von Auftritten für jede von unterschiedlichen Stressamplituden ist; und
Berechnen eines Index (A5), der ein Fehlerrisiko der Rohrleitung anzeigt, aus dem Ermüdungszyklus für jede der unterschiedlichen Stressamplituden und einer Anzahl von Auftritten für diese Stressamplitude bis zum Auftreten eines Fehlers, wobei die Anzahl von Auftritten aus einer S-N-Kurve bestimmt wird, wobei das Berechnen folgendes umfasst:

Erlangen einer Druckschwingungsamplitude aus den **durch** die Simulation erlangten Druckschwingungen,

Dividieren der gemessenen Wellenform **durch** einen quadratischen Mittelwert der gemessenen Wellenform, um dadurch eine umgewandelte gemessene Wellenform zu erlangen,

Zählen einer Anzahl von Auftritten für einen relativen Wert von jeder von unterschiedlichen Stressamplituden unter Verwendung der umgewandelten gemessenen Wellenform, wobei der relative Wert von jeder von unterschiedlichen Stressamplituden ein **durch** Dividieren der Stressamplitude **durch** den quadratischen Mittelwert erlangter Wert ist, und

Multiplizieren des relativen Werts von jeder von unterschiedlichen Stressamplituden, die mit der gezählten Anzahl von Auftritten assoziiert sind, mit der erlangten Druckschwingungsamplitude, um dadurch eine Amplitude zu berechnen, und die gezählte Anzahl von Auftritten als den Ermüdungszyklus für die berechnete Amplitude zu bestimmen.

7. Rohrleitungsdiagnoseprogramm, das veranlasst, dass ein Computer das Verfahren nach Anspruch 6 ausführt.

## Revendications

1. Dispositif de diagnostic de canalisation comprenant :

des moyens d'exécution de simulation (11) pour configurer un circuit électrique équivalent à une installation de canalisations à diagnostiquer en utilisant des informations de canalisation pour spécifier une configuration de l'installation de canalisations, et exécuter une simulation d'oscillations de pression à l'intérieur d'une canalisation de l'installation de canalisations en supposant qu'une tension du circuit électrique est une pression à l'intérieur de la canalisation et qu'un courant électrique est un débit de fluide circulant à travers la canalisation ;

des moyens d'entrée de forme d'onde (15) pour recevoir des données de mesure sur une forme d'onde mesurée qui est une variation dans le temps de la pression à l'intérieur de la canalisation, les données de mesure étant des données mesurées par un capteur connecté à la canalisation ;

**caractérisé en ce qu'**il comprend en outre :

des moyens d'analyse de cycle de fatigue (12) pour calculer, sur la base des oscillations de pression acquises par la simulation et la forme d'onde mesurée, un cycle de fatigue de la canalisation qui est un nombre d'occurrences pour chacune des différentes amplitudes de contrainte ; et

des moyens de calcul d'indice (13) pour calculer un indice indiquant un risque de défaillance de la canalisation à partir du cycle de fatigue pour chacune des différentes amplitudes de contrainte et un nombre d'occurrences pour ladite amplitude de contrainte jusqu'à ce qu'une défaillance survienne, le nombre d'occurrences étant déterminé à partir d'une courbe S-N,

dans lequel les moyens d'analyse de cycle de fatigue (12) sont configurés pour acquérir, à partir des oscillations de pression acquises par la simulation, une amplitude d'oscillation de pression,

diviser la forme d'onde mesurée par une amplitude de racine carrée moyenne de la forme d'onde mesurée, en acquérant ainsi une forme d'onde mesurée convertie,

compter un nombre d'occurrences pour une valeur relative de chacune des différentes amplitudes de contrainte en utilisant la forme d'onde mesurée convertie, la valeur relative de chacune des différentes amplitudes de contrainte étant une valeur acquise en divisant ladite amplitude de contrainte par l'amplitude de racine carrée moyenne, et

multiplier la valeur relative de chacune des différentes amplitudes de contrainte associées au nombre compté d'occurrences par l'amplitude d'oscillation de pression acquise, en calculant ainsi une amplitude, et déterminer le nombre compté d'occurrences en tant que cycle de fatigue pour l'amplitude calculée.

2. Dispositif de diagnostic de canalisation selon la revendication 1, dans lequel

les moyens d'analyse de cycle de fatigue calculent, sur la base d'une amplitude acquise par la simulation et d'un cycle de fatigue au niveau d'une position de mesure proche, une amplitude de contrainte et un cycle de fatigue au niveau d'une position autre que la position de mesure.

3. Dispositif de diagnostic de canalisation selon la revendication 1 ou 2, dans lequel
l'installation de canalisations est un réseau de canalisations d'eau, et les informations de canalisation sont des informations de réseau de canalisations d'eau détenues dans un système d'information géographique.

4. Dispositif de diagnostic de canalisation selon l'une quelconque des revendications 1 à 3, dans lequel
le moyen d'exécution de simulation réalise une optimisation de manière à ce qu'une amplitude d'un résultat de mesure de la pression coïncide avec une amplitude acquise par la simulation.

5. Dispositif de diagnostic de canalisation selon l'une quelconque des revendications 1 à 4,
dans lequel les moyens d'analyse de cycle de fatigue sont configurés pour compter le nombre d'occurrences pour la valeur relative de chacune des différentes amplitudes de contrainte en appliquant un procédé rainflow, un procédé de franchissement de niveau ou un procédé de comptage de paire de plages à la forme d'onde mesurée convertie.

6. Procédé de diagnostic de canalisation mis en œuvre par ordinateur comprenant :

la configuration d'un circuit électrique équivalent à une installation de canalisations à diagnostiquer en utilisant des informations de canalisation (A1) pour spécifier une configuration de l'installation de canalisations, et l'exécution d'une simulation (A3) d'oscillations de pression à l'intérieur d'une canalisation de l'installation de canalisations en supposant qu'une tension du circuit électrique est une pression à l'intérieur de la canalisation et qu'un courant électrique est un débit de fluide circulant à travers la canalisation ;
la réception (A2) de données de mesure sur une forme d'onde mesurée qui est une variation dans le temps de la pression à l'intérieur de la canalisation, les données de mesure étant des données mesurées par un capteur connecté à la canalisation ;
le procédé étant **caractérisé par** :

le calcul, sur la base des oscillations de pression acquises par la simulation et la forme d'onde mesurée, d'un cycle de fatigue (A4) de la canalisation qui est un nombre d'occurrences pour chacune des différentes amplitudes de contrainte ; et
le calcul d'un indice (A5) indiquant un risque de défaillance de la canalisation à partir du cycle de fatigue pour chacune des différentes amplitudes de contrainte et un nombre d'occurrences pour ladite amplitude de contrainte jusqu'à ce qu'une défaillance survienne, le nombre d'occurrences étant déterminé à partir d'une courbe S-N,
dans lequel le calcul comprend :

l'acquisition, à partir des oscillations de pression acquises par la simulation, d'une amplitude d'oscillation de pression,
la division de la forme d'onde mesurée par une amplitude de racine carrée moyenne de la forme d'onde mesurée, en acquérant ainsi une forme d'onde mesurée convertie,
le comptage d'un nombre d'occurrences pour une valeur relative de chacune des différentes amplitudes de contrainte en utilisant la forme d'onde mesurée convertie, la valeur relative de chacune des différentes amplitudes de contrainte étant une valeur acquise en divisant ladite amplitude de contrainte par l'amplitude de racine carrée moyenne, et
la multiplication de la valeur relative de chacune des différentes amplitudes de contrainte associées au nombre compté d'occurrences par l'amplitude d'oscillation de pression acquise, en calculant ainsi une amplitude, et déterminer le nombre compté d'occurrences en tant que cycle de fatigue pour l'amplitude calculée.

7. Programme de diagnostic de canalisation amenant un ordinateur à exécuter le procédé selon la revendication 6.

Fig.1

100

PIPELINE DIAGNOSING DEVICE

11

SIMULATION
EXECUTING UNIT

12

FATIGUE CYCLE
ANALYZING UNIT

13

INDEX CALCULATING
UNIT

# Fig.2

10

**PIPELINE DIAGNOSING DEVICE**

14 — INPUT UNIT

15 — WAVEFORM INPUT UNIT

11 — SIMULATION EXECUTING UNIT

12 — FATIGUE CYCLE ANALYZING UNIT

13 — INDEX CALCULATING UNIT

16 — OUTPUT UNIT

# Fig.3

```
          START

            ↓                    A1
    INPUT PIPELINE
    INFORMATION

            ↓                    A2
    INPUT PRESSURE
    WAVEFORM

            ↓                    A3
  EXECUTE SIMULATION BY USING
     PIPELINE INFORMATION

            ↓                    A4
  CALCULATE FATIGUE CYCLE FROM AMPLITUDE AND
  PRESSURE WAVEFORM ACQUIRED BY SIMULATION

            ↓                    A5
    CALCULATE INDEX FROM
      FATIGUE CYCLE

            ↓                    A6
    OUTPUT ANALYSIS
        RESULT

            ↓
           END
```

# Fig.4

PIPELINE DIAGNOSING DEVICE — 20

| WAVEFORM INPUT UNIT — 15 | INPUT UNIT — 14 | PIPELINE INFORMATION DATABASE — 23 |

SIMULATION EXECUTING UNIT — 11

OPTIMIZING UNIT — 21

FATIGUE CYCLE ANALYZING UNIT — 12

PIPELINE STRENGTH ESTIMATING UNIT — 22

INDEX CALCULATING UNIT — 13

OUTPUT UNIT — 16

## Fig.5

```
                    ┌─────────────┐
                    │    START    │
                    └──────┬──────┘
                           │           B1
                    ┌──────▼──────────┐
                    │ INPUT PIPELINE  │
                    │   INFORMATION   │
                    └──────┬──────────┘
                           │           B2
                    ┌──────▼──────────┐
                    │ INPUT PRESSURE  │
                    │    WAVEFORM     │
                    └──────┬──────────┘
                           │           B3
            ┌──────────────▼────────────────────┐
            │ EXECUTE SIMULATION BY USING        │
            │ PIPELINE INFORMATION               │
            └──────────────┬────────────────────┘
                           │           B4
                      ◇ IS AMPLITUDE ◇         NO
                    ERROR SMALLER THAN ─────────────┐
                         TARGET?                    │   B5
                           │ YES            ┌────────▼─────────┐
                           │                │ CORRECT PARAMETER│
                           │                └──────────────────┘
                           │           B6
        ┌──────────────────▼──────────────────────────────┐
        │ CALCULATE FATIGUE CYCLE FROM AMPLITUDE AND       │
        │ PRESSURE WAVEFORM ACQUIRED BY SIMULATION         │
        └──────────────────┬──────────────────────────────┘
                           │           B7
                    ┌──────▼──────────┐
                    │ ESTIMATE STRENGTH│
                    │    OF PIPE       │
                    └──────┬──────────┘
                           │           B8
                    ┌──────▼──────────┐
                    │ CALCULATE INDEX  │
                    │ FROM FATIGUE CYCLE│
                    └──────┬──────────┘
                           │           B9
                    ┌──────▼──────────┐
                    │ OUTPUT ANALYSIS │
                    │     RESULT      │
                    └──────┬──────────┘
                           │
                    ┌──────▼──────┐
                    │     END     │
                    └─────────────┘
```

Fig.6

EP 3 764 074 B1

Fig.7

$$R = \frac{f(V)}{2gDi}$$

$$L = \frac{l}{gA}$$

$$C = \frac{lgA}{a^2}$$

25

# Fig.8

FREQUENCY

NORMALIZED AMPLITUDE
(30A)

FREQUENCY

NORMALIZED AMPLITUDE
(30B)

WEIGHTED AVERAGING

FREQUENCY

NORMALIZED AMPLITUDE

FREQUENCY

NORMALIZED AMPLITUDE

APPLY SIMULATED
AMPLITUDE

Fig.9

# Fig.10

COMPUTER

110

111 CPU

112 MAIN MEMORY

113 STORAGE DEVICE

121

114 INPUT INTERFACE

115 DISPLAY CONTROLLER

116 DATA READER/ WRITER

117 COMMUNICATION INTERFACE

118 INPUT INTERFACE

119 DISPLAY CONTROLLER

120 RECORDING MEDIUM

130

50

**REFERENCES CITED IN THE DESCRIPTION**

**Patent documents cited in the description**

- JP 2001344295 A
- JP 2005315581 A
- JP 2007101232 A
- JP 2013061350 A
- WO 2017199839 A
- JP 2018043221 A